# EUROPEAN PATENT SPECIFICATION

(11) **EP 1 730 926 B1**
(45) Date of publication and mention of the grant of the patent: **31.07.2013**
(21) Application number: 05717275.1
(22) Date of filing: 11.03.2005
(51) Int. Cl.: H04L 29/06

(54) **CONTROLLING ACCESS TO SERVICES IN A COMMUNICATIONS SYSTEM**
REGELUNG DES ZUGRIFFS AUF DIENSTE IN EINEM KOMMUNIKATIONSSYSTEM
CONTROLE DES ACCES AUX SERVICES DANS UN SYSTEME DE COMMUNICATION

(30) Priority: 31.03.2004 FI 20040475; 30.06.2004 US 879585
(43) Date of publication of application: 13.12.2006
(73) Proprietor: Nokia Corporation, 02150 Espoo (FI)
(72) Inventor: YLIKOSKI, Martti, FI-00400 Helsinki (FI); HYÖTYLÄINEN, Tahvo, FI-33500 Tampere (FI); VIRTANEN, Timo, FIN-01900 Nurmijarvi (FI); LAINE, Arttu, FI-53920 Lappeenranta (FI); KIISKINEN, Terho, FI-33540 Tampere (FI); AAKULA, Jukka, FI-00660 Helsinki (FI)
(74) Representative: Ruuskanen, Juha-Pekka
(86) International application number: PCT/FI2005/000149
(87) International publication number: WO 2005/096588

(56) References cited:
- WO-A2-03/044615
- US-A1- 2002 199 182
- US-A1- 2003 120 583
- US-A1- 2003 212 991

## Description

### BACKGROUND OF THE INVENTION

### FIELD OF THE INVENTION

The present invention relates to controlling access to services in a communications system.

### DESCRIPTION OF THE RELATED ART

A communication system can be seen as a facility that enables communication sessions between two or more entities such as user equipment and/or other nodes associated with the communication system. The communication may comprise, for example, communication of voice, data, multimedia and so on. Communication systems providing wireless communication for communications devices, including various user equipment, are known. An example of the wireless systems is the public land mobile network (PLMN). Another example is the wireless local area network (WLAN).

A PLMN is typically a cellular system wherein a base transceiver station (BTS) or similar access entity serves user equipment (UE) such as mobile stations (MS) via a wireless interface between these entities. The operation of the apparatus required for the communication can be controlled by one or several control entities. The various control entities may be interconnected. One or more gateway nodes may also be provided for connecting the cellular network to other networks, such as to another cellular system or to a public switched telephone network (PSTN) and/or other communication networks such as an IP (Internet Protocol) and/or other packet switched data networks.

A cellular network; as an example of a communication system, may thus provide a number of communications services for a user. Furthermore the cellular network may provide access to various services and applications provided by the cellular network or by entities or networks external to the cellular network. These various services and application are often called content services. In the following description the term service generally refers to content services.

For controlling access to services, a communications system typically maintains information about service subscriptions. Only users having a service subscription may be allowed to access some services. Typically the service subscription information is maintained in a database or in a directory, and there is a subscription server managing the service subscriptions and service provisioning. Service provisioning refers here to configuring various network elements so that the user is provided with the access to the service he has subscribed to. Information about user subscribing a new service may be input manually to the subscription server by a person handling subscription information. Alternatively, the subscription server may be equipped with an interface for receiving subscription information from a further server which a user may access, for example, by browsing the Internet.

Access to some services may be controlled simply by service provisioning. In this case, when the relevant network elements have been configured properly, the user can access the service and otherwise he cannot access the service. In some cases, however, a user's access to a service is not dependent on configuring network element. In this case there may be need to monitor the user's service usage on-line, for example, for controlling the service usage or for charging purposes.

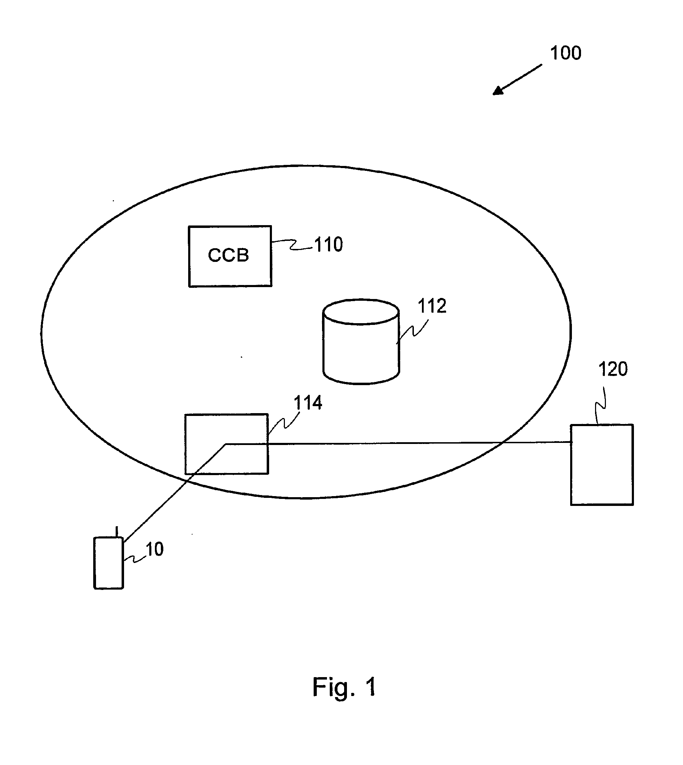

Figure 1 shows schematically an example of a communications system 100, a communication device 10 of a user and also a server 120 external to the communications system. In the example shown in Figure 1, the user of the communications device 10 is accessing a service provided by the server 120. The communication system 100 has a Customer Care and Billing (CCB) system 110 and an information store 112 for service subscription information. Figure 1 shows further a network element 114 for monitoring the user's service usage. The communications system operator may, for example, wish to charge the user differently for browsing the Internet or for accessing his emails from a mail server. The network element 114 may monitor, for example, the protocol headers of the data packets transmitted to the communication device 10 for determining the type of content of the data packets. For simply monitoring, the network element 114 may not need access to the subscription information. But if the network element 114 is controlling the users' access to services based on subscription information, the network element 114 needs to have access to the subscription information in the information store 112.

Typically a network operator of a communications system has a customer care and billing system with an information store for subscription information. If the network operator wishes to add to the communications system further network elements for controlling users' service usage, the customer care and billing system typically needs to be modified for providing access to the subscription information. Different network operators may have different customer care and billing systems, and the network elements for controlling service usage may be provided by different vendors. The customer care and billing system typically uses certain protocols, which may be even proprietary protocols of the network operator. Therefore at least protocol translation needs to be done for providing access to the customer care and billing system for the network element controlling service usage. Traditionally a lot of resources have been invested in making a specific customer care and billing system and network elements needing access to the customer care and billing information interoperable.

Alternatively, it is possible that a further information store is used for storing information relating to services provided by servers or network elements external to the communication system of the network operator. One reason for this is that a network operator may be reluctant to give access to the customer care and billing system for any network elements. A further reason may be that the customer care and billing system does not store information needed for controlling service usage. Additionally, a customer care and billing system may not be able to respond as often as is needed to on-line queries made by network elements controlling service usage.

There are thus a number of problems in providing a solution for controlling users' service usage. Typically it is expected that a solution involves a considerable amount of integration work.

WO 03/044615 discloses network service brokers which simplify access functionality available on various networks. Network elements can communicate in the network and the differences in specific protocols used by terminals can be hidden.

One of the aims of the present invention is provide a feasible solution to the problem of controlling users' service usage.

### SUMMARY OF THE INVENTION

A first aspect of the present invention relates to a proxy network element for controlling access to services in a communications system, said proxy network element configured to
communicate with a plurality of further network elements using respectively a protocol belonging to a plurality of protocols, said plurality of further network elements controlling service usage based on service subscriptions, and
provide access for said plurality of further network elements to a plurality of information stores of different type, said information stores storing information relating to service subscriptions,
characterised in that the proxy network element is further configured to:
convert requests received from said plurality of further network elements into unified requests comprising unified messages having a predefined set of attributes or other predefined message components; and
process said unified requests, said processing comprising fetching of Information from multiple information stores of the plurality of information stores,
wherein said proxy network element provides support for communicating using said plurality of protocols and support for accessing said plurality of information stores.

A second aspect of the present invention relates to a system for controlling access to services in a communications system, said system comprising
a plurality of information stores of different types comprising at least one information store for storing information relating to service subscriptions,
a plurality of first network elements for controlling service usage based on service subscriptions, said plurality of first network elements using respectively a protocol of a plurality of first protocols for communicating information relating to the service subscriptions, and
a proxy network element configured to:
communicate with said plurality of first network elements using said respective protocol belonging to a plurality of protocols and to
provide access for said plurality of first network elements to said plurality of information stores,
characterised in that the proxy network element is further configured to:
convert requests received from said plurality of first network elements into unified requests comprising unified messages having a predefined set of attributes or other predefined message components; and
process said unified requests, said processing comprising fetching of information from multiple information stores of the plurality of information stores,
said proxy network element providing support for communicating using said plurality of protocols and support for accessing said plurality of information stores.

An embodiment of the present invention relates to a system for controlling access to services in a communications system, said system comprising
at least one information store for storing information relating to service subscriptions,
a first network element for managing said information relating to service subscriptions, said first network element configured to store and access information in said at least one information store,
at least one second network element for controlling service usage based on service subscriptions, and
a proxy network element configured to provide access for said at least one second network element to said at least one information store and to send to the first network element information relating to a new service subscription for making the new service subscription.

A further embodiment of the present invention relates to a proxy network element for controlling access to services in a communications system, said proxy network element configured to
provide access for at least one first network element to at least one information store, said at least one first network element controlling service usage based on service subscriptions, and
send to a second network element information relating to a new service subscription for making the new service subscription, said second network element managing said information relating to service subscriptions and storing information in at least one of said at least one information store.

A third aspect of the present invention relates to a method for processing a request in a proxy network element, said method comprising:
communicating with a plurality of further network elements (114) using respectively a plurality of protocols, said plurality of further network elements (114) controlling service usage based on service subscriptions, said proxy network element providing support for communicating using said plurality of protocols and support for accessing a plurality of information stores of different types; and
providing access for said plurality of further network elements (114) to said plurality of information stores (212), said information stores storing information relating to said service su bscriptions;
characterised in that the method further comprises:
   converting requests received from said plurality of further network elements into unified requests comprising unified messages having a predefined set of attributes or other predefined message components; and
   processing said unified requests, said processing comprising fetching of information from multiple information stores of the plurality of information stores.

Another embodiment of the present invention relates to a method for processing a request in a proxy network element, said method comprising
receiving a request in accordance with a protocol using a respective protocol specific module, said request relating to service usage and being received from a further network element responsible for controlling service usage, said protocol specific module belonging to a plurality of protocol specific modules provided in said network element,
converting said request into a unified request, and
processing said unified request.

A yet further embodiment of the present invention relates to a method for controlling access to services in a communication network, said method comprising
receiving a request relating to service usage from a first network element responsible for controlling service usage,
detecting a need for a new service subscription relating to said request, and
sending information relating to the new service subscription to a second network element responsible for managing service subscriptions.

### BRIEF DESCRIPTION OF THE DRAWINGS

Embodiments of the present invention will now be described by way of example only with reference to the accompanying drawings, in which:
Figure 1 shows schematically a communication system with a network element for monitoring users' service usage;
Figure 2 shows schematically a proxy network element in accordance with an embodiment of the invention in a communications system;
Figure 3 shows schematically details of the proxy network element;
Figure 4 shows schematically further details of the proxy network element;
Figure 5 shows schematically a proxy network element in accordance with a further embodiment of the invention in a communications system;
Figure 6 shows a flowchart of a method in accordance with an embodiment of the invention, and
Figure 7 shows a flowchart of a further method in accordance with an embodiment of the invention .

### DETAILED DESCRIPTION OF THE PREFERRED EMBODIMENTS

The terms service usage and access to services in this description and in the appended claims refer mainly to content services. As mentioned above, a network element controlling service usage may identify the content service, for example, based on a network address, protocol, and/or destination URL (Uniform Resource Locator). Some examples of content services are browsing (typically using Hypertext Transfer Protocol HTTP), electronic mail (specific protocols for communications between an email client and an email server), and services providing specific content like news services. News services and other specific content services are typically identified by URLs.

When the use of certain content services is controlled or monitored by a network operator providing mobile communications services, a user wishing to use these content services with a mobile station typically needs to have a service subscription to these content services with the network operator. It is appreciated that for accessing and using, for example, certain news services a user typically needs to have a subscription also with the news service provider. Subscriptions with content service providers are, however, not discussed further in this description.

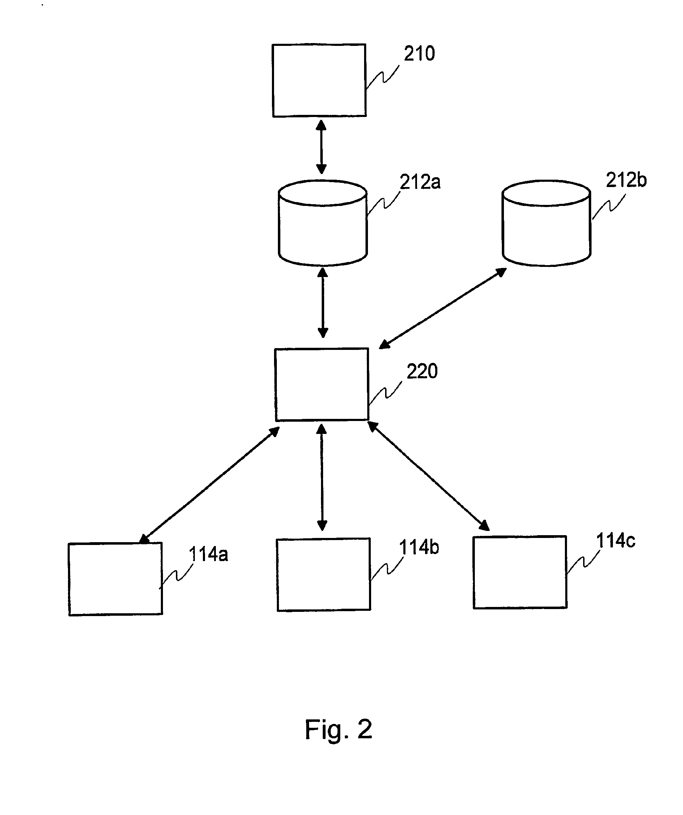

Figure 2 shows schematically a proxy network element 220 in accordance with an embodiment of the invention in a communications system 200. The communications system may be, for example, a cellular communications system having a radio access network comprising base stations and base station controllers for controlling radio resources. Figure 2 shows only those network elements, which are relevant for understanding the present invention.

The communication system 200 has a network element 210 for managing subscription information. This network element 210 may be, for example, a part of a customer care and billing system. Alternatively, it may be a network element, managing subscription information relating to services provided by servers external to the communication system 200. The communication system 200 also has, as an example, two information stores 212a, 212b for storing subscription information. It is possible that the first information store 212a contains information relating to the same users as the second information store 212b, but the pieces of user information or subscription information contained in these information stores are different. For example, the information store 212a may contain information relating to the services provided by the communications system 200 and the second information store 212b may contain information relating to services provided by servers external to the communications system 200. It is possible that the communication system 200 contains only one information store or more than two information stores.

An information store may be a directory employing a certain protocol for accessing and modifying the information stored in the directory. One example is a directory employing the Lightweight Directory Access Protocol (LDAP). An information store may alternatively be a relational database, for example, an Oracle database or a DB/2 database. Further examples of information stores are proprietary information stores. There are also emerging standards for information stores, examples of which are Liberty, 3GPP GUP (Third Generation Partnership Project Generic User Profile), and SOAP/XML (Simple Object Access Protocol / Extensible Markup Language)

The communication system 200 contains a plurality of network elements 114a, 114b, 114c for monitoring and controlling service usage. These network elements 114 need to have access to at least one of the information stores 212a, 212b storing subscription information. A network element 114 for monitoring and controlling service usage typically has the following functionality. The network element 114 gets the end user's (subscriber's) identity from the network (in other words, from other network elements). In addition, the network element 114 monitors end user's traffic and thus knows, which service the end user is currently using. It needs to retrieve end user's subscription information for that particular service from one or multiple of data stores 212a, 212b. The subscription information defines, how the network element 114 should monitor and control the end user's traffic. Different monitoring options can be, for example, count transmitted or received bytes, measure connection or session time, count only certain URLs or web pages accessed and report the measurements either to a file or to another network element. Controlling options can be, for example, allowing unlimited access, denying access, asking from another network element, how much traffic is allowed, redirecting traffic to another destination, or assuring certain QoS (Quality of Service). There are many common standards specifying how network elements monitoring and controlling service usage interact with each other and retrieve the user and subscription information. The following are some examples of such standards: LDAP, Radius, Diameter, Corba and SOAP/XML.

It is appreciated that in the following description and in the appended claims a reference to a network element controlling service usage means a network element controlling and/or monitoring service usage.

The proxy network element 220 provides connectivity between the network elements 114 and the information stores 212. As there are many possible protocols a network element 114 can use, the proxy network element 220 provides support for a plurality of protocols for communications between the network elements 114 and the proxy network element 220. Furthermore, as the information stores may be of different types, the proxy network element 220 provides support for accessing a plurality of different information stores.

A proxy network element 220 enables use of existing infrastructure for managing subscriptions and information about subscriptions. If the existing information stores have the needed data, the proxy 220 enables service usage controlling network elements to connect to the information stores. The proxy 220 thus saves the network operators duplicate investments into the system infrastructure for managing subscriptions.

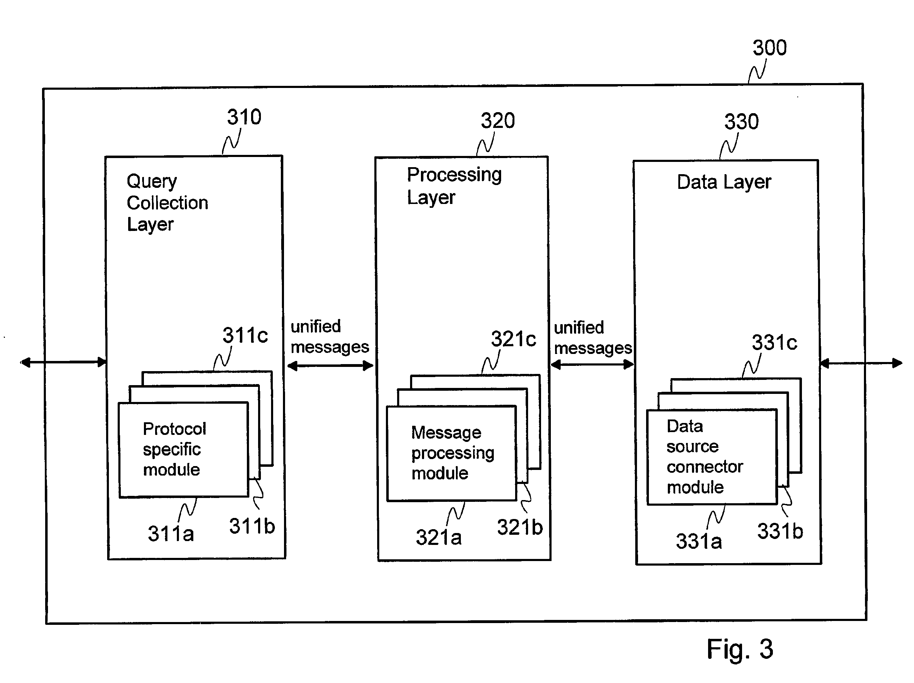

Figure 3 shows schematically details of one implementation of the proxy network element 300. The proxy 300 provides support for a plurality of protocols for communicating with network elements 114 controlling access to services. In Figure 3, this is shown as a query collection layer 310 including a set of protocol specific modules 311 which listen for incoming queries from the network elements 114. In addition, the protocol specific modules 311 are responsible for sending the response back to network elements 114 using the network element specific protocol. To process the queries from the network elements 114, the proxy 300 translates the requests into unified requests used inside the proxy 300. Typically the protocol specific modules 311 are responsible for this translation into unified requests. The processing layer 320 is responsible for processing the unified messages. The processing layer 320 typically includes a set of processing modules 321, as shown in Figure 3. In the processing layer 320 it is determined based on easily modifiable configuration which information needs to be fetched and from which information stores. For fetching information from information stores, the proxy 300 has different a data layer 330 including data source connector modules 331.

It is appreciated that a unified message in this description and in the appended claims refers to a set of predefined attributes or other predefined message components. There may be defined a set of predefined message structures. A message structure here refers to a predefined set of attributes or other message components. Typically each predefined message structure has a respective identifier, and this message identifier may be used for determining how to process the unified message. For example, unified message could be a hash table, where keys and values are:

### PROTOCOL RADIUS

| | |
|---|---|
| NE | GGSN |
| TYPE | PROFILE_QUERY |
| user_id | foo@bar.com |
| IMSI | 3294537457324532 |
| MSISDN | +358501231234 |
| source_ip | 141.192.76.13 |
| URL | wap://wap.bar.com/foo/song.mp3 |
| timestamp | 20040311114543 |

In the beginning profile of query process a hash table could, for example, include only first four attributes. The rest of the attributes are added in the processing layer 320. The processing layer 320 may determine the subscriber identity IMSI (International Mobile Subscriber Identity) and the phone number MSISDN (Mobile Subscriber Integrated Services Digital Network) based on the original user identity information user_id, by accessing an information store containing information about the correspondence of the user identities and the subscriber identities.

The proxy 300 thus provides the protocol driver support for various protocols the network elements 114 may use. In addition the proxy 300 provides the ability to program the translation business logic. Translation business logic consists of modules each capable of doing dedicated operations. Each module's operation can be further specified with the configuration of proxy 300. The proxy 300 also has mechanism for adding new protocol specific modules 311, new processing modules 321 and/or new data source connector modules 331 to the process of connecting clients to data sources. If a needed protocol specific module (query collector module), processing module or data source connector module is not yet available, the proxy 300 has a well defined API (Application Programming Interface), which makes it possible to implement the needed module. Such modules can be added to the proxy 300 without affecting the existing modules and without need to recompile the proxy 300.

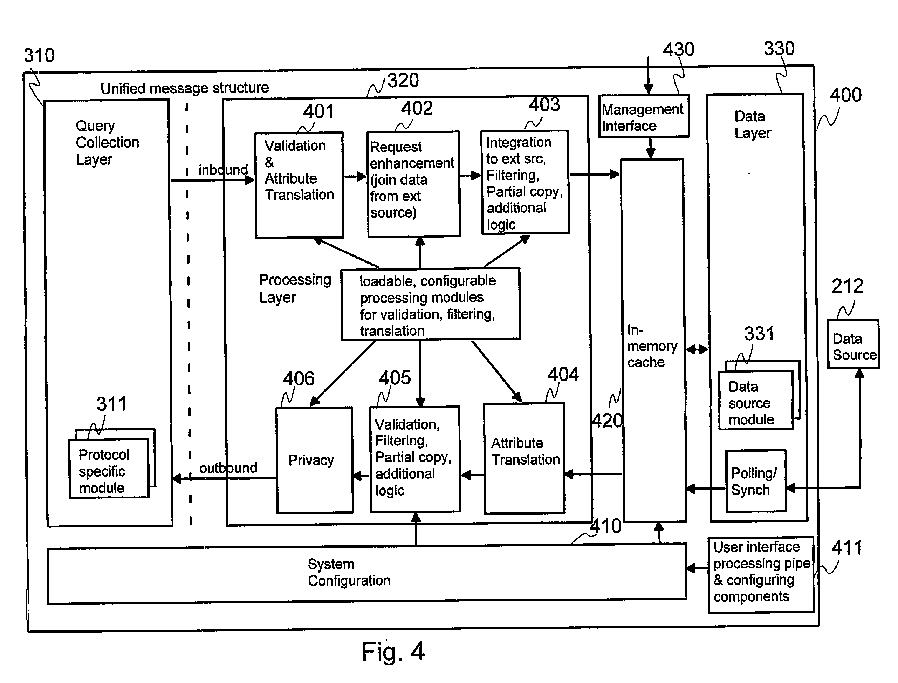

Figure 4 shows schematically further details of a proxy network element 400. The proxy 400 has a modular architecture that allows for adding, modifying and deleting processing modules during the request processing. These modules allow for joining of data from multiple information stores, and thus they create a truly powerful virtual data store. Subscription information can be stored in a plurality of information stores in a flexible way, and the proxy 400 determines which data to fetch and from which information store.

To process the queries/requests from the network elements 114, the proxy 400 has a plurality of processing modules 321 for processing requests. When a specific request is received, the proper processing modules 321 for processing the request can be selected based on the received request. Typically the received request is first translated into a unified request, and then the modules for processing the unified request are selected. The request is then processed in a pipeline processing manner using the set of processing modules, the processing modules sequentially following each other.

The following are some examples of processing modules for processing request. A request validation processing module 401 checks that the request contains necessary information for providing a response. An attribute translation processing module, which is in Figure 4 shown to be part of the same processing module 401 as the request validation processing module, translates attributes in the original request into attributes used in processing requests in the proxy 400. For example, names of the attributes and the types of the attributes may need to be changed or a new attribute may need to be constructed based on other attributes. A request enhancement processing module 402 is responsible for fetching information, which is relevant for processing the original request but was not present in the original request. For example, the request enhancement processing module 402 may fetch a telephone number used in a specific information store based on a user identity present in the original request. As a further example, it is possible that a subscriber identity relating to the original user identity needs to be fetched from a first information store and then the telephone number is fetched from a second information store using the subscriber identity fetched from the first information store. A request filtering processing module 403 is responsible for filtering before information is fetched from the information stores. For example, it is possible that certain requests are treated as notifications and no response will be provided. As a further example, it is possible that in certain situations a standard response is sent. This may be applicable, for example, to prepaid subscriptions. Figure 4 shows also a copying processing module. The copying processing module is responsible sending a complete copy or a partial copy of the request to a further network element or to a further process, for example, to a fraud detection system. Furthermore, as Figure 4 shows, it is possible to provide a number of additional logic modules.

Similarly, the proxy 400 contains a plurality of processing modules for processing unified responses before converting them into responses to be sent to the network elements 114 controlling service usage. The conversion from a unified message into a protocol message to be sent to the network element 114 takes place in the query collection layer 310, typically in the specific protocol module. A set of processing modules from the plurality of processing modules may be selected based on the unified response to be processed. Figure 4 shows some examples of processing modules for processing responses. An attribute translation processing module 404 translates; where necessary, attributes of the unified message into attributes to be sent to the network element 114. The processing component 405 performs similar tasks as the processing component 403, namely validation, filtering and/or sending copies of the message. The privacy processing component 406 may be used, for example, for encrypting some information in the message. It is appreciated that same processing modules may be applicable for processing unified requests and unified responses.

The response sent from a proxy network element back to the network element controlling service usage typically contains subscription information indicating details for monitoring and/or controlling the user's service usage.

The processing modules for processing the unified requests and responses may be configurable. The processing modules for processing the unified requests and responses may also be loadable. Proxy 400 has a system configuration 410 specifying, which protocols are supported and how different queries are processed i.e. what processing modules are used and in which order. Only processing modules that are needed and specified in the configuration, are loaded. For each processing module, the system configuration 410 can specify further, how that processing module processes the query. Thus the same processing module can behave in a different way while processing different types of queries. For example, for query types A and D a filtering processing module can filter out prepaid subscribers, for query type B it can filter out postpaid subscribers, and for query type C it can filter out both prepaid and postpaid subscribers. This increases the reusability of processing modules, and makes it easier for the proxy 400 to adapt to different processing needs.

The system configuration part 410 shows in Figure 4 is discussed in detail above. There may also be a user interface 411 or other interface for specifying processing pipelines and configuring modules. As seen in previous paragraph, the system configuration is the soul of the proxy 400 as the system configuration specifies, how the proxy 400 behaves. To ease the configuring, a graphical user interface may be useful.

Figure 4 also shows a cache memory 420 for storing a cached copy of the subscription information originally fetched from information stores 212. This means that it is possible to first check whether information to be fetched from one of the information stores is already present in the cache memory. The cache memory thus off-loads query load from the information stores and provides better performance.

In-memory cache 420 allows for clients to store real-time session information to the proxy. A session can be, for example, a PDP context in GPRS network. The proxy 400 can store information related to the end user's session for the duration of the session. A network element 114 can, for example, inform the proxy 400 about the end user's location or measurement data relating to the session. Another network element 114 can request for the session information or the session information may be needed to construct a reply to another network element's 114 query. If the only function that the proxy 400 performs is the protocol translation between network elements 114 and information stores 212, it is not mandatory that the proxy maintains session information for each session or for any session, for example, if memory is low. The more the proxy 400 caches, the better the performance of the system typically is.

As Figure 4 shows, there may also be a management interface 430 in the proxy 400. In certain situations, it might be beneficial to know currently active sessions. Proxy's in-memory cache 420 can be queried for administrative purposes using the management interface 430. Due to some missed queries or malfunction in the network, some session data may be left in the in-memory cache 420 even if the session has been terminated. In such cases the management interface 430 can be used to purge orphaned session information.

The proxy 400 also has means for synchronizing service subscription information stored in said memory means with information stored in said plurality of information stores. It is possible that the synchronization is carried out by the proxy polling the information stores for changes, for example, periodically. Alternatively, the information stores may send updates relating to changed information, for example, periodically or as soon as the change takes place. When the proxy 400 notices a change in subscriber's subscription and the proxy 400 knows that the subscriber has an active session, the proxy 400 can push the updated subscription information to the network element 114 controlling the service usage. This requires support for unsolicited messages from the protocol that is being used to communicate between the proxy 400 and the network element 114.

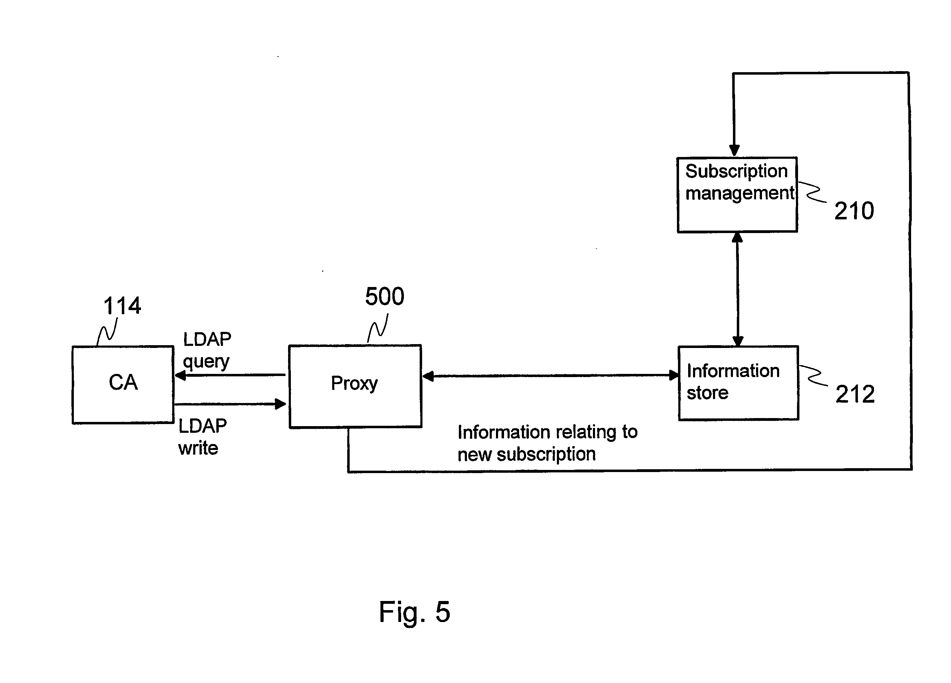

Figure 5 shows schematically a proxy network element 500 in accordance with a further embodiment of the invention in a communications system. In Figure 5, the network element 114 is configured to detect a need for a new service subscription. Typically the network element 114 first asks the proxy 500 for subscriber's subscription information for the service the subscriber is just about to access. If the subscriber has not subscribed for that service, the proxy 500 will inform the network element 114 that the subscriber doesn't have subscription for that service. In such case, the network element 114 can propose to the subscriber a new subscription. If the subscriber accepts the new subscription, the network element 114 will inform the proxy 500 about the new service subscription, thus confirming the new service subscription. Thereafter the proxy 500 sends to information relating to the new service subscription to the network element 210, which is responsible for managing service subscriptions. An alternative to proposing to the user a new subscription is to make the new subscription without confirmation. This means that in response to detecting a need for a new service subscription, the proxy network element 500 is configured to send information relating to the new service subscription to a network element 210 managing subscription information. The network element 210 then stores information relating to the new service subscription in the information store 212 shown in Figure 5. It is possible that the network element 210 requests acceptance from the subscriber (user) for the service subscription. It is furthermore possible that the proxy network element 500 sends information about the new subscription to further network elements, in addition to the network element 210. For example, the proxy network element 500 may configure a network element so that access to the subscribed service is possible for the user. As a second example, the proxy network element 500 may inform a billing system about the new subscription.

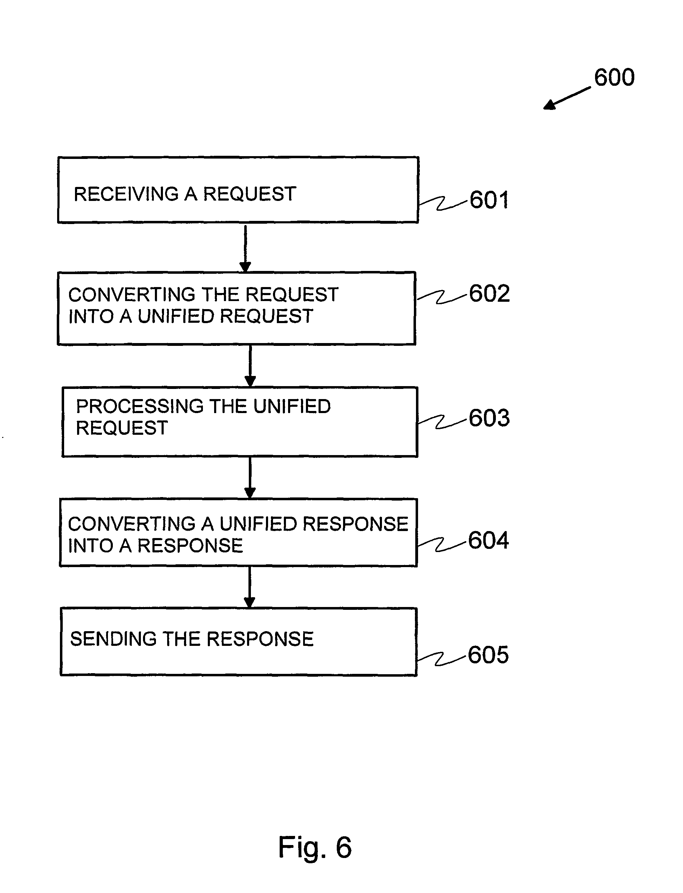

Figure 6 shows a flowchart of a method 600 in accordance with an embodiment of the invention. This method 600 is carried out in a proxy network element. In step 601 a request relating to service usage is received from a network element controlling service usage. The request is typically received using a protocol module compatible with the request. In step 602, the received request is converted into a unified request. In step 603, the unified request is processed. This processing typically results in a unified response. If a response is to be sent to the network element controlling service usage, the unified response is converted typically into a response in accordance with the same protocol than the request received in step 601. Should the response be sent to a further network element, the protocol of the response may be different from the protocol of the request. In step 605 the response is sent.

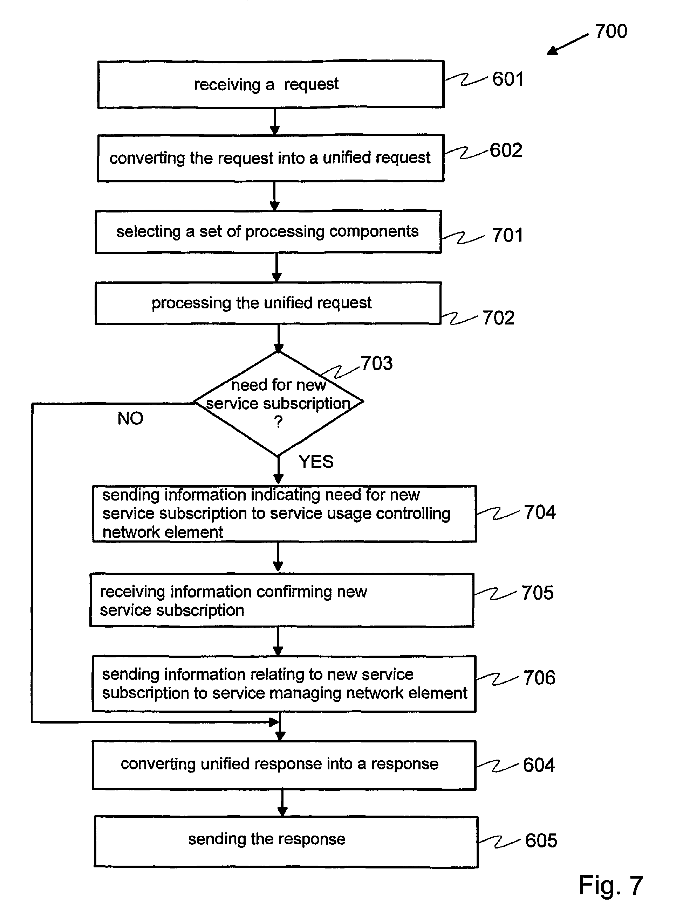

Figure 7 shows a flowchart of a further method 700 in accordance with an embodiment of the invention. The method 700 starts with the same steps 601 and 602 as the method 600. Thereafter, in step 701, a set of processing modules is selected from a plurality of processing modules for processing the unified request in step 702. Should the proxy network element detect a need for a new service subscription in step 703, it may send information indicating the need for the new service subscription to the network element controlling service usage in step 704. The need for a new service subscription is typically detected when processing a unified request within the processing module pipeline. In step 705, the proxy network element may receive information confirming the new subscription from the network element controlling service usage. The messages sent between the proxy network element and the network element controlling service usage are typically processed using the protocol specific modules 311 and the processing modules 321. In response to receiving information confirming the new service subscription, the proxy network element sends information relating to the new service subscription to a network element managing services in step 706. In step 706, one of the data source connector modules 331 is typically employed. As discussed above, it is alternatively possible that the proxy network element proceeds from step 703 directly to step 706. In this case, the user accessing the service need not be aware that a subscription needed to be made. The method 700 continues with steps 604 and 605.

It is appreciated that the functionality of detecting a need for a new subscription and making the new subscription for the user may be implemented in various kinds of proxy network elements suitable for systems controlling service usage. Such a proxy element need not necessarily provide support for a plurality of protocols or information stores nor employ a unified message structure or processing modules.

It is possible that when processing a request relating to service usage, the proxy network element queries information from at least one information store. The proxy network element may further store information queried an information store. The proxy network element may further check, before querying information from an information store, whether said information to be queried is already stored within the proxy network element.

The proxy network element may further store session information relating to requests for further use.

The proxy network element may further receive information indicating a change in subscription information from an information store. The proxy network element may itself query for this information. The proxy network element may send information relating to said change in subscription information to at least one network element controlling service usage, especially when a service session relating to said change in subscription information is active.

It is appreciated that a service subscription relates to a subscriber. The user of the service may be the same entity as the subscriber or an entity relating to the subscriber.

It is furthermore appreciated that the terms user and subscriber in this specification cover both persons and processes subscribing to services and using services. The term user refers also to a process and a communications device used by a human user for accessing services.

## Claims

1. A proxy network element (220) for controlling access to services in a communications system, said proxy network element configured to:
communicate with a plurality of further network elements (114) using respectively a protocol belonging to a plurality of protocols, said plurality of further network elements (114) controlling service usage based on service subscriptions; and
provide access for said plurality of further network elements (114) to a plurality of information stores (212) of different types, said information stores storing information relating to said service subscriptions;
the proxy network element is further configured to:
convert requests received from said plurality of further network elements into unified requests comprising unified messages having a predefined set of attributes or other predefined message components; and
process said unified requests, said processing comprising fetching of information from multiple information stores of the plurality of information stores,
wherein said proxy network element provides support for communicating using said plurality of protocols and support for accessing said plurality of information stores.

2. The proxy network element (220) as defined in claim 1, comprising a plurality of protocol specific modules (311), at least one of the protocol specific modules (311) relating to a respective protocol of said plurality of protocols.

3. The proxy network element (220) as defined in claim 1, comprising a plurality of data source connector modules (331), at least one data source connector module (331) relating to a respective information store (212) of said plurality of information stores (212).

4. The proxy network element (220) as defined in claim 1, wherein the apparatus is further configured to process said unified requests for constructing unified responses, comprising unified messages.

5. The proxy network element (220) as defined in claim 4, further configured to
convert a unified response into a response in accordance with a protocol of a respective request to be sent to at least one of said plurality of further network elements (214).

6. The proxy network element (220) as defined in claim 4, comprising a plurality of processing modules (321) for processing the unified messages.

7. The proxy network element (220) as defined in claim 6, further configured to
select a set of processing modules (321) from the plurality of processing modules (321) based on a unified message to be processed.

8. The proxy network element (220) as defined in claim 6, wherein the plurality of processing modules (321) for processing the unified messages comprises at least one of a message validation processing module (401), an attribute translation processing module (402), and a message filtering processing module (403).

9. The proxy network element (220) as defined in claim 6, wherein the plurality of processing modules (321) comprises at least one processing module for querying information from at least one of said at least one information store (212).

10. The proxy network element (220) as defined in claim 6, wherein the plurality of processing modules (321) comprises at least one processing module for querying information from an external information source.

11. The proxy network element (220) as defined in claim 6, wherein processing modules (321) in said plurality of processing modules (321) are loadable during operation of the proxy network element.

12. The proxy network element (220) as defined in claim 6, wherein processing modules (321) in said plurality of processing modules (321) are configurable during operation of the proxy network element (220).

13. The proxy network element (220) as defined in claim 4, further configured to
query information from said at least one information store (212) selected from said plurality of information stores (212) based on a request to be processed.

14. The proxy network element (220) as defined in claim 13, further configured to
store information queried from at least one of said at least one information store (212).

15. The proxy network element (220) as defined in claim 13, further configured to
check, before querying information from an information store (212), whether said information to be queried is stored within the proxy network element.

16. The proxy network element (220) as defined in claim 1, further configured to receive information indicating a change in said subscription information from at least one of said plurality of information stores (212).

17. The proxy network element (220) as defined in claim 16, further configured to query for said information indicating a change in said subscription information.

18. The proxy network element (220) as defined in claim 16, further configured to send information relating to said change in said subscription information to at least one of said plurality of further network elements (214) controlling said service usage.

19. The proxy network element (220) as defined in claim 18, further configured to send said information relating to said change in said subscription information when a service session relating to said change in said subscription information is active.

20. The proxy network element (220) as defined in claim 1, further configured to store session information relating to requests for further use.

21. The proxy network element (220) as defined in claim 1, further configured to detect a need for a new service subscription.

22. The proxy network element (220) as defined in claim 21, further configured to send information relating to said new service subscription to a second network element (210) responsible for subscription management.

23. The proxy network element (220) as defined in claim 1, further configured to:
send to a second network element (210) information relating to a new service subscription for making the new service subscription, said second network element (210) managing said information relating to service subscriptions and storing information in at least one of said plurality of information stores (212).

24. The proxy network element (220) as defined in claim 23, further configured to detect a need for the new service subscription.

25. The proxy network element (220) as defined in claim 24, wherein said proxy network element is further configured to:
send to one of the plurality of further network elements (214) information indicating the need for the new service subscription, and
receive from said one of the plurality of further network elements (214) information confirming the new service subscription before sending said information relating to the new service subscription to the second network element (210).

26. The proxy network element (220) as defined in claim 24, wherein said proxy network element is further configured to send to said second network element (210) information relating to the new service subscription in response to detecting the need for the new service subscription.

27. A system for controlling access to services in a communications system, said system comprising:
a plurality of information stores (212) of different types comprising at least one information store (212) for storing information relating to service subscriptions;
a plurality of first network elements (214) for controlling service usage based on said service subscriptions, said plurality of first network elements (214) using respectively a protocol belonging to a plurality of protocols for communicating said information relating to the service subscriptions; and
a proxy network element (220) configured to:
communicate with said plurality of first network elements (214) using said respective protocol belonging to a plurality of protocols; and to
provide access for said plurality of first network elements (214) to said plurality of information stores (212);
the proxy network element is further configured to:
convert requests received from said plurality of first network elements into unified requests comprising unified messages having a predefined set of attributes or other predefined message components; and
process said unified requests, said processing comprising fetching of information from multiple information stores of the plurality of information stores,
said proxy network element providing support for communicating using said plurality of protocols and support for accessing said plurality of information stores.

28. The system as defined in claim 27, further comprising:
a second network element for managing said information relating to said service subscriptions, said second network element configured to store and access information in at least one of said plurality of information stores.

29. The system as defined in claim 28, wherein said proxy network element is further configured to detect a need for a new service subscription.

30. The system as defined in claim 28 or 29, wherein said proxy network element is further configured to
send to at least one of said plurality of first network elements information indicating the need for the new service subscription,
receive from said at least one of said plurality of first network elements information confirming the new service subscription, and
send, in response to receiving from said at least one of said plurality of first network elements said information confirming the new service subscription, to said second network element information relating to the new service subscription for making a subscription.

31. The system as defined in claim 29, wherein said proxy network element is further configured to
send, in response to detecting the need for the new service subscription, to said second network element information relating to the new service subscription for making a subscription.

32. The system as defined in claim 27, further comprising:
a second network element (210) for managing said information relating to said service subscriptions, said second network element (210) configured to store and access information in at least one of said plurality of information stores (212);
wherein the proxy network element (220) is configured to send to the second network element (210) information relating to a new service subscription for making the new service subscription.

33. The system as defined in claim 32, wherein said proxy network element is further configured to
detect a need for the new service subscription.

34. The system as defined in claim 33, wherein said proxy network element is further configured to
send to at least one of said plurality of first network elements information indicating the need for the new service subscription,
receive from said at least one of said plurality of first network elements information confirming the new service subscription before sending said information relating to the new service subscription to the second network element.

35. The system as defined in claim 33, wherein said proxy network element is further configured to
send to said second network element said information relating to the new service subscription in response to detecting the need for the new subscription.

36. A method for processing a request in a proxy network element, said method comprising:
communicating with a plurality of further network elements (114) using respectively a plurality of protocols, said plurality of further network elements (114) controlling service usage based on service subscriptions, said proxy network element providing support for communicating using said plurality of protocols and support for accessing a plurality of information stores of different types; and
providing access for said plurality of further network elements (114) to said plurality of information stores (212), said information stores storing information relating to said service subscriptions;
the method further comprises:
converting requests received from said plurality of further network elements into unified requests comprising unified messages having a predefined set of attributes or other predefined message components; and
processing said unified requests, said processing comprising fetching of information from multiple information stores of the plurality of information stores.

37. The method as defined in claim 36, further comprising:
receiving the requests in accordance with a protocol using a respective protocol specific module (311), said request relating to service usage, said protocol specific module (311) belonging to a plurality of protocol specific modules (311) provided in a proxy network element (220).

38. The method as defined in claim 37, further comprising:
using a data source connector module (331) belonging to a plurality of data source connector modules (331) provided in a proxy network element (220) for accessing the plurality of information stores (212).

39. The method as defined in claim 36 or claim 37, further comprising
selecting a set of processing modules (321) from a plurality of processing modules (321) for processing said unified request.

40. The method as defined in claim 36 or claim 37, further comprising:
converting a unified response resulting from said processing into a response in accordance with a protocol belonging to said plurality of protocols.

41. The method as defined in claim 36, further comprising:
detecting a need for a new service subscription relating to said request, and
sending information relating to the new service subscription to a second network element (210) responsible for managing service subscriptions.

42. The method as defined in claim 41, further comprising;
sending, to one of the plurality of further network elements (214), information indicating the need for the new service subscription.

43. The method as defined in claim 42, further comprising:
receiving from said one of the plurality of further network elements (214) information confirming the new service subscription before sending said information relating to the new service subscription to the second network element (210).

44. The method as defined in claim 41, wherein said sending is carried out in response to said detecting.

## Patentansprüche

1. Proxy-Netzelement (220) zum Steuern des Zugriffs auf Dienste in einem Kommunikationssystem, wobei das Proxy-Netzelement konfiguriert ist:
mit mehreren weiteren Netzelementen (114) unter Verwendung jeweils eines Protokolls, das zu mehreren Protokollen gehört, zu kommunizieren, wobei die mehreren weiteren Netzelemente (114) die Dienstverwendung basierend auf Dienstabonnements steuern; und
den Zugriff für die mehreren weiteren Netzelemente (114) auf mehrere Informationsspeicher (212) verschiedener Typen bereitzustellen, wobei die Informationsspeicher Informationen speichern, die sich auf die Dienstabonnements beziehen;
wobei das Proxy-Netzelement ferner konfiguriert ist:
die von den mehreren weiteren Netzelementen empfangenen Anforderungen in vereinheitlichte Anforderungen umzusetzen, die vereinheitlichte Nachrichten umfassen, die eine vorgegebene Menge von Attributen oder anderen vorgegebenen Nachrichtenkomponenten besitzen; und
die vereinheitlichten Anforderungen zu verarbeiten, wobei die Verarbeitung das Holen von Informationen von mehreren Informationsspeichern der mehreren Informationsspeicher umfasst,
wobei das Proxy-Netzelement Unterstützung für das Kommunizieren unter Verwendung der mehreren Protokolle und Unterstützung für das Zugreifen auf die mehreren Informationsspeicher bereitstellt.

2. Proxy-Netzelement (220) nach Anspruch 1, das mehrere protokollspezifische Module (311) umfasst, wobei sich wenigstens eines der protokollspezifischen Module (311) auf ein entsprechendes Protokoll der mehreren Protokolle bezieht.

3. Proxy-Netzelement (220) nach Anspruch 1, das mehrere Datenquellen-Verbindermodule (331) umfasst, wobei sich wenigstens ein Datenquellen-Verbindermodul (331) auf einen entsprechenden Informationsspeicher (212) der mehreren Informationsspeicher (212) bezieht.

4. Proxy-Netzelement (220) nach Anspruch 1, das ferner konfiguriert ist, die vereinheitlichten Anforderungen zum Konstruieren vereinheitlichter Antworten, die vereinheitlichte Nachrichten umfassen, zu verarbeiten.

5. Proxy-Netzelement (220) nach Anspruch 4, das ferner konfiguriert ist,
eine vereinheitlichte Antwort in eine Antwort in Übereinstimmung mit einem Protokoll einer entsprechenden Anforderung umzusetzen, die an wenigstens eines der mehreren weiteren Netzelemente (214) zu senden ist.

6. Proxy-Netzelement (220) nach Anspruch 4, das mehrere Verarbeitungsmodule (321) zum Verarbeiten der vereinheitlichten Nachrichten umfasst.

7. Proxy-Netzelement (220) nach Anspruch 6, das ferner konfiguriert ist,
einen Satz von Verarbeitungsmodulen (321) aus den mehreren Verarbeitungsmodulen (321) basierend auf einer zu verarbeitenden vereinheitlichten Nachricht auszuwählen.

8. Proxy-Netzelement (220) nach Anspruch 6, wobei die mehreren Verarbeitungsmodule (321) zum Verarbeiten der vereinheitlichten Nachrichten wenigstens ein Nachrichtenvalidierungs-Verarbeitungsmodul (401), ein Attributübersetzungs-Verarbeitungsmodul (402) und ein Nachrichtenfilterungs-Verarbeitungsmodul (403) umfassen.

9. Proxy-Netzelement (220) nach Anspruch 6, wobei die mehreren Verarbeitungsmodule (321) wenigstens ein Verarbeitungsmodul zum Abfragen von Informationen von wenigstens einem des wenigstens einen Informationsspeichers (212) umfassen.

10. Proxy-Netzelement (220) nach Anspruch 6, wobei die mehreren Verarbeitungsmodule (321) wenigstens ein Verarbeitungsmodul zum Abfragen von Informationen von einer externen Informationsquelle umfassen.

11. Proxy-Netzelement (220) nach Anspruch 6, wobei die Verarbeitungsmodule (321) in den mehreren Verarbeitungsmodulen (321) während des Betriebs des Proxy-Netzelements ladbar sind.

12. Proxy-Netzelement (220) nach Anspruch 6, wobei die Verarbeitungsmodule (321) in den mehreren Verarbeitungsmodulen (321) während des Betriebs des Proxy-Netzelements (220) konfigurierbar sind.

13. Proxy-Netzelement (220) nach Anspruch 4, das ferner konfiguriert ist,
Informationen von dem wenigstens einen Informationsspeicher (212), der aus den mehreren Informationsspeicher (212) ausgewählt worden ist, basierend auf einer zu verarbeitenden Anfrage abzufragen.

14. Proxy-Netzelement (220) nach Anspruch 13, das ferner konfiguriert ist,
die von wenigstens einem des wenigstens einen Informationsspeichers (212) abgefragten Informationen zu speichern.

15. Proxy-Netzelement (220) nach Anspruch 13, das ferner konfiguriert ist,
vor dem Abfragen von Informationen von einem Informationsspeicher (212) zu prüfen, ob die abzufragenden Informationen innerhalb des Proxy-Netzelements gespeichert sind.

16. Proxy-Netzelement (220) nach Anspruch 1, das ferner konfiguriert ist, Informationen, die eine Änderung der Abonnementinformationen angeben, von wenigstens einem der mehreren Informationsspeicher (212) zu empfangen.

17. Proxy-Netzelement (220) nach Anspruch 16, das ferner konfiguriert ist, die Informationen abzufragen, die eine Änderung der Abonnementinformationen angeben.

18. Proxy-Netzelement (220) nach Anspruch 16, das ferner konfiguriert ist, Informationen, die sich auf die Änderung der Abonnementinformationen beziehen, an wenigstens eines der mehreren weiteren Netzelemente (214), die die Dienstverwendung steuern, zu senden.

19. Proxy-Netzelement (220) nach Anspruch 18, das ferner konfiguriert ist, die Informationen, die sich auf die Änderung der Abonnementinformationen beziehen, zu senden, wenn eine Dienstsitzung, die sich auf die Änderung der Abonnementinformationen bezieht, aktiv ist.

20. Proxy-Netzelement (220) nach Anspruch 1, das ferner konfiguriert ist, Sitzungsinformationen bezüglich der Anforderungen für die weitere Verwendung zu speichern.

21. Proxy-Netzelement (220) nach Anspruch 1, das ferner konfiguriert ist, einen Bedarf an einem neuen Dienstabonnement zu detektieren.

22. Proxy-Netzelement (220) nach Anspruch 21, das ferner konfiguriert ist, Informationen bezüglich des neuen Dienstabonnements an ein zweites Netzelement (210), das für das Abonnementmanagement verantwortlich ist, zu senden.

23. Proxy-Netzelement (220) nach Anspruch 1, das ferner konfiguriert ist:
Informationen bezüglich eines neuen Dienstabonnements an ein zweites Netzelement (210) zu senden, um das neue Dienstabonnement herzustellen, wobei das zweite Netzelement (210) die Informationen bezüglich der Dienstabonnements managt und die Informationen in wenigstens einem der mehreren Informationsspeicher (212) speichert.

24. Proxy-Netzelement (220) nach Anspruch 23, das ferner konfiguriert ist, einen Bedarf an dem neuen Dienstabonnement zu detektieren.

25. Proxy-Netzelement (220) nach Anspruch 24, wobei das Proxy-Netzelement ferner konfiguriert ist:
Informationen, die den Bedarf an dem neuen Dienstabonnement angeben, an eines der mehreren weiteren Netzelemente (214) zu senden, und
vor dem Senden der Informationen bezüglich des neuen Dienstabonnements an das zweite Netzelement (210) von dem einen der mehreren weiteren Netzelemente (214) Informationen zu empfangen, die das neue Dienstabonnement bestätigen.

26. Proxy-Netzelement (220) nach Anspruch 24, wobei das Proxy-Netzelement ferner konfiguriert ist, Informationen bezüglich des neuen Dienstabonnements in Reaktion auf das Detektieren des Bedarfs an dem neuen Dienstabonnement an das zweite Netzelement (210) zu senden.

27. System zum Steuern des Zugriffs auf Dienste in einem Kommunikationssystem, wobei das System Folgendes umfasst:
mehrere Informationsspeicher (212) verschiedener Typen, die wenigstens einen Informationsspeicher (212) zum Speichern von Informationen bezüglich der Dienstabonnements umfassen;
mehrere erste Netzelemente (214) zum Steuern der Dienstverwendung basierend auf den Dienstabonnements, wobei die mehreren ersten Netzelemente (214) jeweils ein Protokoll verwenden, das zu mehreren Protokollen zum Übertragen der Informationen bezüglich der Dienstabonnements gehört; und
ein Proxy-Netzelement (220), das konfiguriert ist:
mit mehreren ersten Netzelementen (214) unter Verwendung des entsprechenden Protokolls, das zu mehreren Protokollen gehört, zu kommunizieren; und
den Zugriff für die mehreren ersten Netzelemente (214) auf die mehreren Informationsspeicher (212) bereitzustellen;
wobei das Proxy-Netzelement ferner konfiguriert ist:
die von den mehreren ersten Netzelementen empfangenen Anforderungen in vereinheitlichte Anforderungen umzusetzen, die vereinheitlichte Nachrichten umfassen, die eine vorgegebene Menge von Attributen oder anderen vorgegebenen Nachrichtenkomponenten besitzen; und
die vereinheitlichten Anforderungen zu verarbeiten, wobei die Verarbeitung das Holen von Informationen von mehreren Informationsspeichern der mehreren Informationsspeicher umfasst,
wobei das Proxy-Netzelement Unterstützung für das Kommunizieren unter Verwendung der mehreren Protokolle und Unterstützung für das Zugreifen auf die mehreren Informationsspeicher bereitstellt.

28. System nach Anspruch 27, das ferner Folgendes umfasst:
ein zweites Netzelement zum Managen der Informationen bezüglich der Dienstabonnements, wobei das zweite Netzelement konfiguriert ist, Informationen in wenigstens einem der mehreren Informationsspeicher zu speichern und auf Informationen in wenigstens einem der mehreren Informationsspeicher zuzugreifen.

29. System nach Anspruch 28, wobei das Proxy-Netzelement ferner konfiguriert ist, einen Bedarf an einem neuen Dienstabonnement zu detektieren.

30. System nach Anspruch 28 oder 29, wobei das Proxy-Netzelement ferner konfiguriert ist,
Informationen, die den Bedarf an dem neuen Dienstabonnement angeben, an wenigstens eines der mehreren ersten Netzelemente zu senden,
von dem wenigstens einen der mehreren ersten Netzelemente Informationen, die das neue Dienstabonnement bestätigen, zu empfangen, und
in Reaktion auf den Empfang der Informationen, die das neue Dienstabonnement bestätigen, von dem wenigstens einen der mehreren Netzelemente Informationen bezüglich des neuen Dienstabonnements an das zweite Netzelement zu senden, um ein Abonnement herzustellen.

31. System nach Anspruch 29, wobei das Proxy-Netzelemente ferner konfiguriert ist,
in Reaktion auf das Detektieren des Bedarfs an dem neuen Dienstabonnement Informationen bezüglich des neuen Dienstabonnements an das zweite Netzelemente zu senden, um ein Abonnement herzustellen.

32. System nach Anspruch 27, das ferner Folgendes umfasst:
ein zweites Netzelement (210) zum Managen der Informationen bezüglich der Dienstabonnements, wobei das zweite Netzelement (210) konfiguriert ist, Informationen in wenigstens einem der mehreren Informationsspeicher (212) zu speichern und auf Informationen in wenigstens einem der mehreren Informationsspeicher (212) zuzugreifen;
wobei das Proxy-Netzelement (220) konfiguriert ist, Informationen bezüglich eines neuen Dienstabonnements an das zweite Netzelement (210) zu senden, um das neue Dienstabonnement herzustellen.

33. System nach Anspruch 32, wobei das Proxy-Netzelement ferner konfiguriert ist,
einen Bedarf an dem neuen Dienstabonnement zu detektieren.

34. System nach Anspruch 33, wobei das Proxy-Netzelement ferner konfiguriert ist,
Informationen, die den Bedarf an dem neuen Dienstabonnement angeben, an wenigstens eines der mehreren ersten Netzelemente zu senden,
vor dem Senden der Informationen bezüglich des neuen Dienstabonnements an das zweite Netzelement von dem wenigstens einem der mehreren ersten Netzelemente Informationen, die das neue Dienstabonnement bestätigen, zu empfangen.

35. System nach Anspruch 33, wobei das Proxy-Netzelement ferner konfiguriert ist,
in Reaktion auf das Detektieren des Bedarfs an dem neuen Abonnement die Informationen bezüglich des neuen Dienstabonnements an das zweite Netzelement zu senden.

36. Verfahren zum Verarbeiten einer Anforderung in einem Proxy-Netzelement, wobei das Verfahren Folgendes umfasst:
Kommunizieren mit mehreren weiteren Netzelementen (114) unter Verwendung von jeweils mehreren Protokollen, wobei die mehreren weiteren Netzelemente (114) die Dienstverwendung basierend auf Dienstabonnements steuern, wobei das Proxy-Netzelement Unterstützung für das Kommunizieren unter Verwendung der mehreren Protokolle und Unterstützung für das Zugreifen auf mehrere Informationsspeicher verschiedener Typen bereitstellt; und
Bereitstellen des Zugriffs für die mehreren weiteren Netzelemente (114) auf die mehreren Informationsspeicher (212), wobei die Informationsspeicher Informationen bezüglich der Dienstabonnements speichern;
wobei das Verfahren ferner Folgendes umfasst:
Umsetzen der von den mehreren weiteren Netzelementen empfangenen Anforderungen in vereinheitlichte Anforderungen, die vereinheitlichte Nachrichten umfassen, die eine vorgegebene Menge von Attributen oder anderen vorgegebenen Nachrichtenkomponenten besitzen; und
Verarbeiten der vereinheitlichten Anforderungen, wobei die Verarbeitung das Holen von Informationen von mehreren Informationsspeichern der mehreren Informationsspeicher umfasst.

37. Verfahren nach Anspruch 36, das ferner Folgendes umfasst:
Empfangen der Anforderungen in Übereinstimmung mit einem Protokoll unter Verwendung eines entsprechenden protokollspezifischen Moduls (311), wobei sich die Anforderung auf die Dienstverwendung bezieht und wobei das protokollspezifische Modul (311) zu mehreren protokollspezifischen Modulen (311) gehört, die in einem Proxy-Netzelement (220) bereitgestellt sind.

38. Verfahren nach Anspruch 37, das ferner Folgendes umfasst:
Verwenden eines Datenquellen-Verbindermoduls (331), das zu mehreren Datenquellen-Verbindermodulen (331) gehört, die in einem Proxy-Netzelement (220) bereitgestellt sind, um auf die mehreren Informationsspeicher (212) zuzugreifen.

39. Verfahren nach Anspruch 36 oder Anspruch 37, das ferner Folgendes umfasst:
Auswählen eines Satzes von Verarbeitungsmodulen (321) von mehreren Verarbeitungsmodulen (321) zum Verarbeiten der vereinheitlichten Anforderung.

40. Verfahren nach Anspruch 36 oder Anspruch 37, das ferner Folgendes umfasst:
Umsetzen einer vereinheitlichten Antwort, die sich aus der Verarbeitung ergibt, in eine Antwort in Übereinstimmung mit einem Protokoll, das zu den mehreren Protokollen gehört.

41. Verfahren nach Anspruch 36, das ferner Folgendes umfasst:
Detektieren eines Bedarfs an einem neuen Dienstabonnement bezüglich der Anforderung und
Senden von Informationen bezüglich des neuen Dienstabonnements an ein zweites Netzelement (210), das für das Managen der Dienstabonnements verantwortlich ist.

42. Verfahren nach Anspruch 41, das ferner Folgendes umfasst:
Senden von Informationen, die den Bedarf an dem neuen Dienstabonnement angeben, an eines der mehreren weiteren Netzelemente (214).

43. Verfahren nach Anspruch 42, das ferner Folgendes umfasst:
vor dem Senden der Informationen bezüglich des neuen Dienstabonnements an das zweite Netzelement (210) Empfangen von Informationen, die das neue Dienstabonnement bestätigen, von dem einen der mehreren weiteren Netzelemente (214).

44. Verfahren nach Anspruch 41, wobei das Senden in Reaktion auf das Detektieren ausgeführt wird.

## Revendications

1. Elément de réseau mandataire (220) permettant de contrôler l'accès à des services dans un système de communication, ledit élément de réseau mandataire étant conçu pour:
communiquer avec une pluralité d'éléments de réseau supplémentaires (114) au moyen respectivement d'un protocole appartenant à une pluralité de protocoles, ladite pluralité d'éléments de réseau supplémentaires (114) contrôlant l'utilisation des services sur la base d'abonnements aux services ; et
donner à ladite pluralité d'éléments de réseau supplémentaires (114) accès à une pluralité d'unités de stockage d'informations (212) de différents types, lesdites unités de stockage d'informations stockant des informations relatives auxdits abonnements aux services ;
lequel élément de réseau mandataire est conçu en outre pour:
convertir des demandes reçues de ladite pluralité d'éléments de réseau supplémentaires en demandes unifiées comprenant des messages unifiés possédant un ensemble prédéfini d'attributs ou d'autres composants de message prédéfinis ; et
procéder à un traitement desdites demandes unifiées, ledit traitement consistant à extraire des informations de plusieurs unités de stockage d'informations parmi la pluralité d'unités de stockage d'informations,
lequel élément de réseau mandataire soutient les communications au moyen de ladite pluralité de protocoles et soutient l'accès à ladite pluralité d'unités de stockage d'informations.

2. Elément de réseau mandataire (220) selon la revendication 1, comprenant une pluralité de modules propres à un protocole (311), au moins un des modules propres à un protocole (311) se rapportant à un protocole respectif parmi ladite pluralité de protocoles.

3. Elément de réseau mandataire (220) selon la revendication 1, comprenant une pluralité de modules de connexion à des sources de données (331), au moins un module de connexion à des sources de données (331) se rapportant à une unité de stockage d'informations (212) respective parmi ladite pluralité d'unités de stockage d'informations (212).

4. Elément de réseau mandataire (220) selon la revendication 1, conçu en outre pour procéder au traitement desdites demandes unifiées pour élaborer des réponses unifiées comprenant des messages unifiés.

5. Elément de réseau mandataire (220) selon la revendication 4, conçu en outre pour
convertir une réponse unifiée en une réponse en conformité avec un protocole d'une demande respective à transmettre à au moins un de ladite pluralité d'éléments de réseau supplémentaires (214).

6. Elément de réseau mandataire (220) selon la revendication 4, comprenant une pluralité de modules de traitement (321) pour procéder au traitement des messages unifiés.

7. Elément de réseau mandataire (220) selon la revendication 6, conçu en outre pour
sélectionner un ensemble de modules de traitement (321) parmi la pluralité de modules de traitement (321) sur la base d'un message unifié à traiter.

8. Elément de réseau mandataire (220) selon la revendication 6, dans lequel la pluralité de modules de traitement (321) pour procéder au traitement des messages unifiés comprend au moins un module parmi un module de traitement de validation de messages (401), un module de traitement de traduction d'attributs (402) et un module de traitement de filtrage de messages (403).

9. Elément de réseau mandataire (220) selon la revendication 6, dans lequel la pluralité de modules de traitement (321) comprend au moins un module de traitement pour rechercher des informations dans au moins une de ladite au moins une unité de stockage d'informations (212).

10. Elément de réseau mandataire (220) selon la revendication 6, dans lequel la pluralité de modules de traitement (321) comprend au moins un module de traitement pour rechercher des informations dans une source d'informations externe.

11. Elément de réseau mandataire (220) selon la revendication 6, dans lequel des modules de traitement (321) dans ladite pluralité de modules de traitement (321) sont susceptibles d'être chargés au cours du fonctionnement de l'élément de réseau mandataire.

12. Elément de réseau mandataire (220) selon la revendication 6, dans lequel des modules de traitement (321) dans ladite pluralité de modules de traitement (321) sont susceptibles d'être configurés au cours du fonctionnement de l'élément de réseau mandataire (220).

13. Elément de réseau mandataire (220) selon la revendication 4, conçu en outre pour
rechercher des informations dans ladite au moins une unité de stockage d'informations (212) sélectionnée parmi ladite pluralité d'unités de stockage d'informations (212) sur la base d'une demande à traiter.

14. Elément de réseau mandataire (220) selon la revendication 13, conçu en outre pour
stocker des informations recherchées dans au moins une de ladite au moins une unité de stockage d'informations (212).

15. Elément de réseau mandataire (220) selon la revendication 13, conçu en outre pour
vérifier, avant de rechercher des informations dans une unité de stockage d'informations (212), si lesdites informations à rechercher sont stockées dans l'élément de réseau mandataire.

16. Elément de réseau mandataire (220) selon la revendication 1, conçu en outre pour recevoir des informations indiquant une modification desdites informations relatives aux abonnements depuis au moins une de ladite pluralité d'unités de stockage d'informations (212).

17. Elément de réseau mandataire (220) selon la revendication 16, conçu en outre pour rechercher lesdites informations indiquant une modification desdites informations relatives aux abonnements.

18. Elément de réseau mandataire (220) selon la revendication 16, conçu en outre pour transmettre des informations relatives à ladite modification desdites informations relatives aux abonnements à au moins un de ladite pluralité d'éléments de réseau supplémentaires (214) contrôlant ladite utilisation des services.

19. Elément de réseau mandataire (220) selon la revendication 18, conçu en outre pour transmettre lesdites informations relatives à ladite modification desdites informations relatives aux abonnements lorsqu'une session de services relative à ladite modification desdites informations relatives aux abonnements est active.

20. Elément de réseau mandataire (220) selon la revendication 1, conçu en outre pour stocker des informations de session relatives à des demandes en vue d'une utilisation ultérieure.

21. Elément de réseau mandataire (220) selon la revendication 1, conçu en outre pour détecter un besoin d'un nouvel abonnement aux services.

22. Elément de réseau mandataire (220) selon la revendication 21, conçu en outre pour transmettre des informations relatives audit nouvel abonnement aux services à un deuxième élément de réseau (210) responsable de la gestion des abonnements.

23. Elément de réseau mandataire (220) selon la revendication 1, conçu en outre pour
transmettre à un deuxième élément de réseau (210) des informations relatives à un nouvel abonnement aux services pour effectuer le nouvel abonnement aux services, ledit deuxième élément de réseau (210) gérant lesdites informations relatives aux abonnements aux services et stockant des informations dans au moins une de ladite pluralité d'unités de stockage d'informations (212).

24. Elément de réseau mandataire (220) selon la revendication 23, conçu en outre pour détecter un besoin du nouvel abonnement aux services.

25. Elément de réseau mandataire (220) selon la revendication 24, conçu en outre pour
transmettre à l'un de la pluralité d'éléments de réseau supplémentaires (214) des informations indiquant le besoin du nouvel abonnement aux services, et
recevoir dudit un de la pluralité d'éléments de réseau supplémentaires (214) des informations confirmant le nouvel abonnement aux services avant de transmettre lesdites informations relatives au nouvel abonnement aux services au deuxième élément de réseau (210).

26. Elément de réseau mandataire (220) selon la revendication 24, conçu en outre pour transmettre audit deuxième élément de réseau (210) des informations relatives au nouvel abonnement aux services en réponse à la détection du besoin du nouvel abonnement aux services.

27. Système permettant de contrôler l'accès à des services dans un système de communication, ledit système comprenant:
une pluralité d'unités de stockage d'informations (212) de différents types comprenant au moins une unité de stockage d'informations (212) pour stocker des informations relatives à des abonnements aux services ;
une pluralité de premiers éléments de réseau (214) pour contrôler l'utilisation des services sur la base desdits abonnements aux services, ladite pluralité de premiers éléments de réseau (214) utilisant respectivement un protocole appartenant à une pluralité de protocoles pour communiquer lesdites informations relatives aux abonnements aux services ; et
un élément de réseau mandataire (220) conçu pour:
communiquer avec ladite pluralité de premiers éléments de réseau (214) au moyen respectivement dudit protocole respectif appartenant à une pluralité de protocoles ; et
donner à ladite pluralité de premiers éléments de réseau (214) accès à ladite pluralité d'unités de stockage d'informations (212) ;
lequel élément de réseau mandataire est conçu en outre pour :
convertir des demandes reçues de ladite pluralité de premiers éléments de réseau en demandes unifiées comprenant des messages unifiés possédant un ensemble prédéfini d'attributs ou d'autres composants de message prédéfinis ; et
procéder à un traitement desdites demandes unifiées, ledit traitement consistant à extraire des informations de plusieurs unités de stockage d'informations parmi la pluralité d'unités de stockage d'informations,
lequel élément de réseau mandataire soutient les communications au moyen de ladite pluralité de protocoles et soutient l'accès à ladite pluralité d'unités de stockage d'informations.

28. Système selon la revendication 27, comprenant en outre:
un deuxième élément de réseau pour gérer lesdites informations relatives auxdits abonnements aux services, ledit deuxième élément de réseau étant conçu pour stocker des informations dans au moins une de ladite pluralité d'unités de stockage d'informations et y accéder.

29. Système selon la revendication 28, dans lequel ledit élément de réseau mandataire est conçu en outre pour détecter un besoin d'un nouvel abonnement aux services.

30. Système selon la revendication 28 ou 29, dans lequel ledit élément de réseau mandataire est conçu en outre pour
transmettre à au moins un de ladite pluralité de premiers éléments de réseau des informations indiquant le besoin du nouvel abonnement aux services,
recevoir dudit au moins un de ladite pluralité de premiers éléments de réseau des informations confirmant le nouvel abonnement aux services, et
transmettre audit deuxième élément de réseau, en réponse à la réception desdites informations confirmant le nouvel abonnement aux services en provenance dudit au moins un de ladite pluralité de premiers éléments de réseau, des informations relatives au nouvel abonnement aux services pour effectuer un abonnement.

31. Système selon la revendication 29, dans lequel ledit élément de réseau mandataire est conçu en outre pour
transmettre audit deuxième élément de réseau, en réponse à la détection du besoin du nouvel abonnement aux services, des informations relatives au nouvel abonnement aux services pour effectuer un abonnement.

32. Système selon la revendication 27, comprenant en outre:
un deuxième élément de réseau (210) pour gérer lesdites informations relatives auxdits abonnements aux services, ledit deuxième élément de réseau (210) étant conçu pour stocker des informations dans au moins une de ladite pluralité d'unités de stockage d'informations (212) et y accéder ;
lequel élément de réseau mandataire (220) est conçu pour transmettre au deuxième élément de réseau (210) des informations relatives à un nouvel abonnement aux services pour effectuer le nouvel abonnement aux services.

33. Système selon la revendication 32, dans lequel ledit élément de réseau mandataire est conçu en outre pour
détecter un besoin du nouvel abonnement aux services.

34. Système selon la revendication 33, dans lequel ledit élément de réseau mandataire est conçu en outre pour
transmettre à au moins un de ladite pluralité de premiers éléments de réseau des informations indiquant le besoin du nouvel abonnement aux services,
recevoir dudit au moins un de ladite pluralité de premiers éléments de réseau des informations confirmant le nouvel abonnement aux services avant de transmettre au deuxième élément de réseau lesdites informations relatives au nouvel abonnement aux services.

35. Système selon la revendication 33, dans lequel ledit élément de réseau mandataire est conçu en outre pour
transmettre audit deuxième élément de réseau lesdites informations relatives au nouvel abonnement aux services en réponse à la détection du besoin du nouvel abonnement aux services.

36. Procédé permettant de procéder au traitement d'une demande dans un élément de réseau mandataire, ledit procédé comprenant les étapes consistant à:
communiquer avec une pluralité d'éléments de réseau supplémentaires (114) au moyen respectivement d'une pluralité de protocoles, ladite pluralité d'éléments de réseau supplémentaires (114) contrôlant l'utilisation des services sur la base d'abonnements aux services, lequel élément de réseau mandataire soutient les communications au moyen de ladite pluralité de protocoles et soutient l'accès à une pluralité d'unités de stockage d'informations de différents types ; et
donner à ladite pluralité d'éléments de réseau supplémentaires (114) accès à ladite pluralité d'unités de stockage d'informations (212), lesdites unités de stockage d'informations stockant des informations relatives auxdits abonnements aux services ;
lequel procédé comprend en outre les étapes consistant à:
convertir des demandes reçues de ladite pluralité d'éléments de réseau supplémentaires en demandes unifiées comprenant des messages unifiés possédant un ensemble prédéfini d'attributs ou d'autres composants de message prédéfinis ; et
procéder à un traitement desdites demandes unifiées, ledit traitement consistant à extraire des informations de plusieurs unités de stockage d'informations parmi la pluralité d'unités de stockage d'informations.

37. Procédé selon la revendication 36, comprenant en outre l'étape consistant à:
recevoir les demandes en conformité avec un protocole au moyen d'un module propre à un protocole (311) respectif, ladite demande se rapportant à l'utilisation des services, ledit module propre à un protocole (311) appartenant à une pluralité de modules propres à un protocole (311) mis à disposition dans un élément de réseau mandataire (220).

38. Procédé selon la revendication 37, comprenant en outre l'étape consistant à :
utiliser un module de connexion à des sources de données (331) appartenant à une pluralité de modules de connexion à des sources de données (331) mis à disposition dans un élément de réseau mandataire (220) pour accéder à la pluralité d'unités de stockage d'informations (212).

39. Procédé selon la revendication 36 ou la revendication 37, comprenant en outre l'étape consistant à:
sélectionner un ensemble de modules de traitement (321) parmi une pluralité de modules de traitement (321) pour procéder au traitement de ladite demande unifiée.

40. Procédé selon la revendication 36 ou la revendication 37, comprenant en outre l'étape consistant à:
convertir une réponse unifiée issue dudit traitement en une réponse en conformité avec un protocole appartenant à ladite pluralité de protocoles.

41. Procédé selon la revendication 36, comprenant en outre les étapes consistant à:
détecter un besoin d'un nouvel abonnement aux services relatif à ladite demande, et
transmettre des informations relatives au nouvel abonnement aux services à un deuxième élément de réseau (210) responsable de la gestion des abonnements aux services.

42. Procédé selon la revendication 41, comprenant en outre l'étape consistant à:
transmettre à l'un de la pluralité d'éléments de réseau supplémentaires (214) des informations indiquant le besoin du nouvel abonnement aux services.

43. Procédé selon la revendication 42, comprenant en outre l'étape consistant à:
recevoir dudit un de la pluralité d'éléments de réseau supplémentaires (214) des informations confirmant le nouvel abonnement aux services avant de transmettre au deuxième élément de réseau (210) lesdites informations relatives au nouvel abonnement aux services.

44. Procédé selon la revendication 41, dans lequel ladite étape consistant à transmettre des informations relatives au nouvel abonnement aux services est exécutée en réponse à ladite étape consistant à détecter un besoin d'un nouvel abonnement aux services.
